# EUROPÄISCHE PATENTANMELDUNG

(11) **EP 0 634 644 A1**
(43) Veröffentlichungstag der Anmeldung: **18.01.1995**
(21) Anmeldenummer: 94810347.8
(22) Anmeldetag: 14.06.1994
(51) Int. Cl.: G01N 21/37, G01N 21/35

(54) **Vorrichtung zur Bestimmung des 13CO2/12CO2-Konzentrationsverhältnisses in einer Gasprobe**

(30) Priorität: 13.07.1993 CH 2095/93
(71) Anmelder: MIC MEDICAL INSTRUMENT CORPORATION, CH-4502 Solothurn (CH)
(72) Erfinder: Gross, Joachim, CH-4500 Solothurn (CH)
(74) Vertreter: Hug Interlizenz AG

(57) **Zusammenfassung**

Die beschriebene Messvorrichtung basiert auf dem NDIR-Verfahren. Gepulstes Infrarotlicht durchsetzt parallel in zwei Strahlengängen (3,4) zunächst eine mit ¹³CO₂ und eine mit ¹²CO₂ gefüllte Küvette (6,7) und nachfolgend ebenfalls parallel zwei Küvetten (8,9), die mit der zu analysierenden Gasprobe gefüllt sind. Die beiden letztgenannten Küvetten (8,9 bilden zusammen mit einem als Druckumformer dienenden Kondensatormikrophon (15) einen optopneumatischen Empfänger (17). Durch Regelung des Druckes in einer der beiden erstgenannten Küvetten (6) wird das Minimum des Druckumformersignals aufgesucht und mit einem entsprechend gewonnen Referenzwert in Beziehung gesetzt. Die einfach zu realisierende Vorrichtung erlaubt eine kostengünstige Durchführung von ¹³CO₂-Atemtests

## Beschreibung

### TECHNISCHES GEBIET

Die vorliegende Erfindung betrifft eine auf dem NDIR-Verfahren (nicht dispersives Infrarot-Verfahren) basierende Vorrichtung zur Bestimmung des ¹³CO₂/¹²CO₂-Konzentrationsverhältnisses in einer Gasprobe gemäss dem Oberbegriff des Patentanspruchs 1.

Verschiedene Substanzen, die vom Körper metabolisiert werden, können mit einer nichtradioaktiven Markierung versehen werden, die in den metabolischen Reaktionsprodukten wieder aufgefunden werden kann. Eines der wesentlichen Produkte des Metabolismus von Kohlenstoffverbindungen ist das CO₂-Molekül. Markiert man eine kohlenstoffhaltige Verbindung an geeigneter Stelle im Molekül durch ein ¹³C-Atom und verabreicht man einem Patienten diese Verbindung, so kann das daraus in seinem Körper gebildete ¹³CO₂ in seiner Ausatemluft nach-gewiesen werden.

Eine wichtige Anwendung hierfür ist die zur Diagnose einer Infektion mit Heliobacter pylori, der als Verursacher von Magen- und Duodenalucera angesehen wird. Als Präparat wird dem Patienten ein ¹³C-markierter Harnstoff verabreicht, aus dem das ¹³CO₂ durch die Urease des Bakteriums gebildet wird (vergl. hierzu auch R.P.H.Logan et al, European Journal of Gastroenterology & Hepatology 1991, Vol 3, No 12, Seiten 915 - 921).

### Weitere Anwendungen sind:

- Mangel an Lipase im Pankreassekret nach Verabreichung von ¹³C-markierten Triglyeriden oder Triolein.
- Leberzirrhose oder chronische Hepatitis nach Verabreichung von ¹³C-Aminopyrin, ¹³C-Phenacetin oder ¹³C-Galactose.
- Aufnahme von schädlichen Substanzen aus der Umwelt, wie z.B. PCB nach Verabreichung von ¹³C-Koffein.

Für alle diese Anwendungen ist der ¹³C-Atemtest eine sehr geeignete, nichtinvasive diagnostische Methode. Wegen der sehr hohen Preise für ¹³C-markierte Substanzen und für die erforderlichen Nachweisgeräte wurde dieser Test bisher jedoch fast ausschliesslich in der Forschung oder bei Kindern angewandt, denen man die alternativ zur Verfügung stehenden Tests an Biopsieproben nicht zumuten wollte. Die ebenfalls an sich zur Verfügung stehenden serologischen Tests haben den Nachteil, dass sie auch nach Eradikation des Keims noch lange positiv bleiben.

Nachdem derzeit vielerorts in die Produktion von ¹³C investiert wird, ist damit zu rechnen, dass die Preise für ¹³C-Präparate in Zukunft sinken werden. Damit die Atemtests jedoch wirklich attraktiv werden können, müssen auch kostengünstige Nachweisgeräte zur Verfügung stehen.

Die Anforderungen an das Messverfahren zum Nachweis des ¹³CO₂ bzw. zur Bestimmung des ¹³CO₂/¹²CO₂-Konzentrationsverhältnisses in der Atemluft eines Patienten sind sehr hoch. Das genannte Verhältnis erhöht sich beispielsweise nach der Einnahme des erwähnten Harnstoffpräparates durch einen mit Heliobacter pylori infizierten Patienten im Zeitraum zwischen etwa 5 und 60 Minuten nach der Einnahme des Präparates von ca. 1 % (Normalwert entsprechend dem natürlichen Isotopenverhältnis) auf lediglich ca. 1,03 %. Zum Nachweis dieser äusserst geringen Konzentrationserhöhung wurden allgemein bisher Massenspektrometer eingesetzt. Der sehr hohe Preis dieser Geräte (ca. 100.000.-- US$) machte es erforderlich, die Atemgasproben an spezielle Labors zu senden, die über ein solches Gerät verfügten, und sie dort analysieren zu lassen. Der damit verbundene logistische sowie finanzielle Aufwand stellte ein weiteres massives Hindernis für eine breite Anwendung der ¹³CO₂-Atemgastests dar.

Es besteht demnach ein Bedarf an einer kostengünstigen Vorrichtung für ¹³CO₂-Atemgastests, die für den normalen Arzt oder zumindest für kleinere Labors erschwinglich ist und darüber hinaus eine einfache und sichere Bedienung auch durch nicht hochspezialisiertes Personal ermöglicht.

### STAND DER TECHNIK

Ein erster Schritt in Richtung auf eine derartige Vorrichtung wurde kürzlich am Institut für Lasermedizin der Universität Düsseldorf von P.Hering und M.Haisch unternommen. Bei der dort realisierten Vorrichtung, welche ihrerseits auf einer Vorrichtung gemäss der DE-A1-3522949 basiert, durchsetzt gepulstes Infrarotlicht parallel je eine von der zu analysierenden Gasprobe durchströmte Küvette und wird nachfolgend mit zwei optopneumatischen Empfängern detektiert. Die optopneumatischen Empfänger bestehen aus je zwei ebenfalls gasgefüllten Küvetten, die über ein Kondensatormikrophon miteinander in Verbindung stehen und von denen je eine in jedem Strahlengang von dem Infrarotlicht durchsetzt wird. Die Kondensator-mikrophone wandeln die durch die Absorption des pulsierenden Infrarotlichtes in der jeweils durchstrahlten Küvette er-zeugten Druckschwankungen in elektrische Signale um. Zur Eichung der Vorrichtung auf das normale ¹³CO₂/¹²CO₂-Verhältnis sind spezielle Eichküvetten vorgesehen, die mit einem dieses Verhältnis aufweisenden Gasgemisch gefüllt sind. Sie werden in die Strahlengänge eingeführt, zur eigentlichen Messung aus diesen jedoch wieder herausgenommen. Zur Bildung des Mess-Signals werden die Amplituden der von den optopneumatischen Empfängern gelieferten Signale miteinander verglichen und die Differenz dieser Signale ermittelt. Abgesehen davon, dass diese Ermittlung eine recht aufwendige Elektronik erfordert, weist dieses Verfahren vor allem den Nachteil auf, dass Messund Eichfehler sowie Umgebungseinflüsse sehr empfindlich in das gewünschte Messergebnis eingehen.

### DARSTELLUNG DER ERFINDUNG

Es ist Aufgabe der vorliegenden Erfindung, eine Vorrichtung der eingangs genannten Art anzugeben, die einfach aufgebaut, kostengünstig herstellbar, einfach zu bedienen und weitestgehend unabhängig von Umgebungseinflüssen ist. Diese Aufgabe wird erfindungsgemäss gelöst durch eine Vorrichtung, wie sie im Patentanspruch 1 gekennzeichnet ist.

Bei der erfindungsgemässen Vorrichtung bilden die beiden zweiten Küvetten zusammen mit den Druckumformermitteln einen optopneumatischen Empfänger. Die erfindungsgemässe Vorrichtung benötigt lediglich einen solchen Empfänger, dessen beide Küvetten jedoch in unterschiedlichen Strahlengängen angeordnet sind. Es sind die Küvetten des optopneumatischen Empfängers, die mit der zu analysierenden Gasprobe, insbesondere eine Atemluftprobe, beschickt werden, während die in den Strahlengängen vorgeschalteten ersten Küvetten ständig mit ¹³CO₂-Gas einerseits und ¹²CO₂-Gas andererseits gefüllt sind. Durch Veränderung des Druckes in einer der beiden letztgenannten Küvetten lässt sich für die zu analysierende Gasprobe sowie für eine Referenzprobe jeweils das Amplitudenminimum des von dem optopneumatischen Empfänger erzeugten Signals ermitteln. Die Messgrösse ergibt sich dann einfach aus der Druckdifferenz.

Bei der erfindungsgemässen Vorrichtung wird demnach von einem Abgleichverfahren Gebrauch gemacht, bei dem sich in vorteilhafter Weise viele mögliche Mess- und Eichfehler sowie Umgebungseinflüsse bereits auf der physikalischen Ebene der Messvorrichtung gegenseitig kompensieren und damit keinen Eingang in das Messergebnis finden können. Die erfindungsgemässe Vorrichtung ist sehr einfach auch durch nicht spezialisiertes Personal zu bedienen.

Vorteilhafte Ausgestaltungen der Erfindung sind in den abhängigen Patentansprüchen gekennzeichnet. Diese betreffen z.B. die Anordnung der Membran der Druckumformermittel sowie Massnahmen zur Steigerung der Empfindlichkeit der erfindungsgemässen Vorrichtung. Die Empfindlichkeit lässt sich z.B. wesentlich dadurch steigern, dass der optopneumatische Empfänger als resonantes, auf die Frequenz der pulsierenden Infrarotlichtquelle abgestimmtes System ausgebildet wird. Es genügt dazu, wenn die beiden Küvetten über eine Verbindungsleitung geeigneter Länge miteinander kommunizieren können. Die Beschickung der beiden Küvetten des optopneumatischen Empfängers mit dem jeweils zu analysierenden Gas kann dabei ohne Störung des resonanten Systems sehr einfach über zwei Kapillaren erfolgen, wenn gleichzeitig in der Verbindungsleitung zwischen den beiden Küvetten, dort, wo sich im Resonanzfall ein Druckknoten ergibt, eine Oeffnung zur Umgebung hin vorgesehen ist. Die Ermittlung des Referenzwertes kann dadurch erleichtert werden, dass ein weiterer, mit dem bereits beschriebenen identischer optopneumatischer Empfänger in den beiden Strahlengängen angeordnet wird. Die Küvetten dieses Empfängers können entweder dauerhaft mit einem ¹³CO₂/¹²CO₂-Gasgemisch bekannter Zusammensetzung oder in gleicher Weise wie vorbeschrieben mit einer Referenzgasprobe, z.B. einer Atemgasrefenzprobe des Patienten, gefüllt werden. Die Küvetten des weiteren optopneumatischen Empfängers können mit Vorteil bei der Messung der eigentlichen Gasprobe in den Strahlengängen verbleiben, so dass sie dort fest montiert werden können und eine aufwendige Mechanik zu ihrer Einbringung bzw. Entfernung aus den Strahlengängen nicht erforderlich ist. Dadurch werden auch Fehler vermieden, die durch Positionierungsgenauigkeiten bei beweglichen Referenzküvetten auftreten können.

### KURZBESCHREIBUNG DER ZEICHNUNGEN

In der Zeichnung zeigt
- Fig. 1: ein erstes Ausführungsbeispiel einer Vorrichtung nach der Erfindung mit lediglich einem optopneumatischen Empfänger,
- Fig.2: ein weiteres Auführungsbeispiel einer erfindungsgemässen Vorrichtung mit zwei optopneumatischen Empfängern, von den einer mit einer Referenzgasprobe bekannter Zusammensetzung gefüllt ist,
- Fig. 3: eine erfindungsgemässe Vorrichtung wie Fig. 2, bei der jedoch jedoch beide optopneumatischen Empfänger mit einer Gasprobe individuell füllbar sind, und
- Fig. 4: einen optopneumatischen Empfänger bei dem das Kondensatormikrophon lediglich einer der beiden Küvetten zugeordnet ist.

### BESCHREIBUNG VON AUSFUEHRUNGSBEISPIELEN

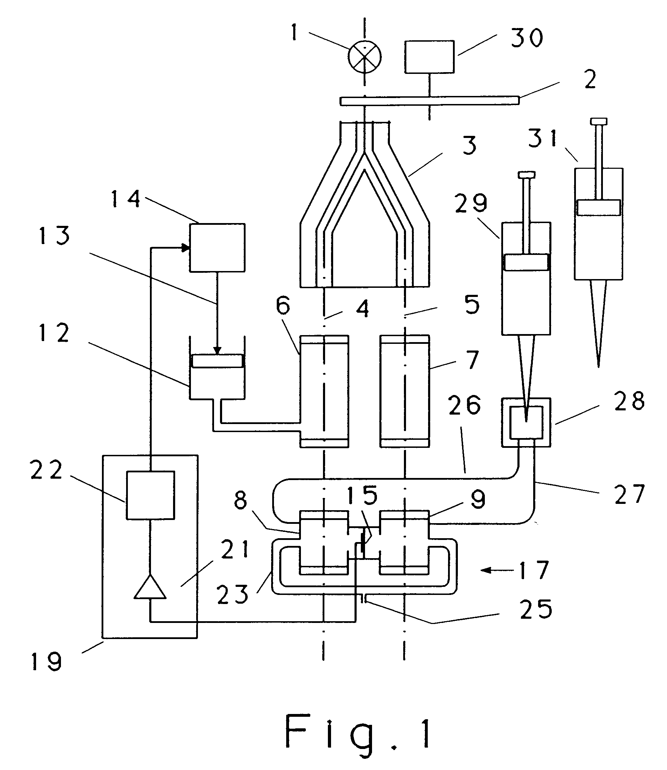

In Fig. 1 ist mit 1 eine Infrarotlichtquelle bezeichnet, bei der es sich vorzugsweise um eine Niedervolt-Halogenlampe handelt. Das Licht der Lichtquelle 1 wird mittels eines motorisch angetriebenen Flügelrades 2 (bzw. einer Loch- oder Schlitzscheibe) periodisch unterbrochen und nachfolgend in einem Strahlteiler 3 in zwei Teilstrahlen 4 und 5 von vorzugsweise gleicher Intensität aufgespalten. Als Strahlteiler kann einfach ein mit einer Y-Bohrung versehener Metallblock verwendet werden, in dessen Bohrungen das Licht wie in Lichtleitern durch mehrfache Reflektion geführt ist. Die beiden Teilstrahlen 4,5 durchsetzen dann zwei erste Küvetten 6 und 7 und nachfolgend zwei zweite Küvetten 8 und 9. Die genannten Küvetten sind jeweils mit Eingangs- und Ausgangsfenstern versehen, die zumindest den Infrarotanteil des Lichtes der Lichtquelle 1 ungehindert durchlassen.

Die Küvette 6 ist mit ¹²CO₂-Gas und die Küvette 7 mit ¹³CO₂-Gas gefüllt. Der Druck des ¹²CO₂-Gases in der Küvette 6 ist mittels eines Druckzylinders 12 und eines auf diesen über eine Mikrometerschraube 13 einwirkenden Stellmotors 14 einstellbar.

Die beiden zweiten Küvetten 8,9 stehen über die Membran eines Kondensatormikrophons 15 (Druckumformermittel) miteinander in Verbindung und bilden zusammen mit dem Kondensatormikrophon einen optopneumatischen Empfänger 17. Die Membran des Kondensatormikrophons 15 bildet dabei einen gemeinsamen Wandteil der beiden zweiten Küvetten 8,9.

Die Anschlussleitungen des Kondensatormikrophons 15 sind mit einer elektronischen Einheit 19 verbunden, und dort auf den Eingang eines Verstärkers 20 geschaltet. Eine mit dem Ausgangssignal des Verstärkes 20 beaufschlagte Regelung 22 wirkt auf den Stellmotor 14 derart ein, dass das Verstärker-Ausgangssignal minimal wird.

Die beiden zweiten Küvetten 8,9 stehen weiter über eine Leitung 23 in kommunizierender Verbindung miteinander. Die Leitung 23 ist in ihrer Mitte mit einer Oeffnung 25 zur Umgebung hin versehen. An die beiden zweiten Küvetten 8,9 sind auch noch Leitungen 26 und 27 angeschlossen, welche anderends von einem Verteilerblock 28 ausgehen, an welchen ein mit einer zu analysierenden Gasprobe gefüllter Behälter, hier in Form der Spritzen 29 bzw. 31, angeschlossen werden kann. Aus den Spritzen 29,31 können die beiden zweiten Küvetten 8 und 9 über die Leitungen 26 und 27 mit dem jeweils zu analysierenden Gas beschickt werden, wobei das zuvor in ihnen vorhandene Gas über die Oeffnung 25 in der Verbindungsleitung 23 in die Umgebung entweicht und sich in den zweiten Küvetten 8, 9 dadurch automatisch Umgebungsdruck einstellt.

Die Funktion der beschriebenen Vorrichtung basiert auf den unterschiedlichen Absortionseigenschaften von ¹²CO₂ und ¹³CO₂ im Infrarotbereich. Das Licht der Lichtquelle 1 weist daher nach den Küvetten 6 und 7 in beiden Strahlengängen 4 und 5 eine etwas verschiedene spektrale Zusammensetzung auf. Im Strahlengang 4 hinter der Küvette 6 sind Frequenzen, auf denen ¹²CO₂ absorbiert, geschwächt und im Strahlengang 5 hinter der Küvette 7 solche, auf denen ¹³CO₂ absorbiert. In den Küvetten 8 und 9 des optopneumatischen Empfängers 17 ergibt sich deshalb im allgemeinen eine unterschiedlich starke Absorption, die im Rhythmus des pulsierenden Lichtes zu unterschiedlich starken Druckschwankungen führt. Durch eine geeignete Veränderung des Druckes in der Küvette 6, lässt sich die Differenz der Druckamplituden in den Küvetten 8,9 jedoch minimieren und, bei völliger Synchronität der Lichtimpulse in beiden Strahlengängen 4 und 5, ganz zum Verschwinden bringen. Diese Aufgabe übernimmt die vorerwähnte Regelung 22.

Zur Steigerung der Empfindlichkeit bei diesem Abgleich wird die Länge der Verbindungsleitung 23 so gewählt, dass sich bezüglich der periodischen Druckschwankungen in den zweiten Küvetten 8,9 und der Verbindungsleitung 23 gerade eine stehende Welle mit einem Druckbauch an der Membran des Kondensatormikrophons 15 ergibt. In der Praxis wird man nach Wahl der Länge der Verbindungsleitung 23 die Frequenz des pulsierenden Lichtes durch Regelung der Drehzahl des das Flügelrad 2 antreibenden Motors 30 auf die gewünschte Resonanzbedingung einstellen.

Damit die beiden Leitungen 26 und 27 zum Beschicken der zweiten Küvetten 8,9 das resonante System nicht stören, sind sie wenigstens abschnittweise als Kapillaren ausgebildet. Desweiteren wirkt sich die Oeffnung 25 in der Verbindungsleitung 23 auf die Ausbildung einer stehenden Welle dann nicht nachteilig aus, wenn die Oeffnung 25 gerade dort angeordnet ist, wo die stehende Welle einen Druckknoten ausbildet. Das wird, bei symmetrischer Ausbildung des optopneumatischen Empfängers 17, gerade in der Mitte der Verbindungsleitung 23 der Fall sein.

Zur Durchführung einer Messung werden die Küvetten 8,9 des optopneumatischen Empfängers 17 zunächst mit einer Referenzgasprobe z.B. aus der Spritze 29 gespült und nachfolgend der vorbeschriebene Abgleich durchgeführt. Dadurch gewinnt man einen, einer ersten Stellung der Mikrometerschraube 13 entsprechenden Referenzwert. Dann werden die beiden zweiten Küvetten 8,9 des optopneumatischen Empfängers 17 mit der eigentlich zu untersuchenden Gasprobe, z.B. aus der Spritze 31, beschickt und der gleiche Abgleich erneut durchgeführt. Es resultiert eine zweite Stellung der Mikrometerschraube. Aus der Differenz der beiden Mikrometerschraubenstellungen kann nach vorgängiger Eichung der Vorrichtung mit verschiedenen, in ihrer Zusammensetzung bekannten Proben, direkt auf das zu ermittelnde ¹³CO₂/¹²CO₂-Konzentrationsverhältnis in der im zweiten Schritt untersuchten Gasprobe geschlossen werden.

Als Referenzgasprobe kann ein Referenzgas bekannter Zusammensetzung oder eine Atemgasprobe des Patienten unmittelbar vor der Einnahme des ¹³CO₂-Präparates verwendet werden. Letzteres hat den Vorteil, dass die Messung unabhängig wird von dem je nach Ernährungsgewohnheiten der zu untersuchenden Person et- was variierenden natürlichen ¹³CO₂/¹²CO₂-Konzentrationsverhältnis in der Ausatemluft.

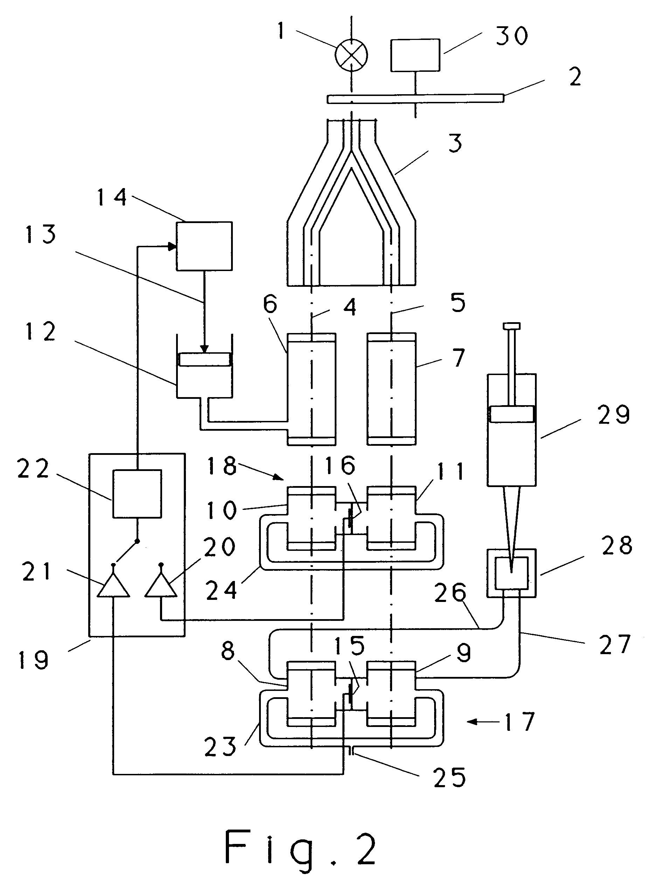

Fig. 2 zeigt eine Ausführungsform mit zwei optopneumatischen Empfängern 17 und 18. Der hier zusätzlich vorgesehene Empfänger 18, der von grundsätzlich gleichem Aufbau wie der Empfänger 17 ist, umfasst die Küvetten 10 und 11, das Kondensatormikrophon 16 und die Verbindungsleitung 24. Die Küvetten 10 und 11 sind zwischen den Küvetten 6 und 7 einerseits und den Küvetten 8 und 9 des Empfängers 17 anderseits in den beiden parallelen Strahlengängen 4 und 5 angeordnet und dort vorzugsweise auch fest montiert. Der Empfänger 18 dient ausschliesslich zur Ermittlung des Referenzwertes. Die beiden Küvetten 10 und 11 sind dazu mit einer festen Referenzgasprobe bekannter Zusammensetzung dauerhaft gefüllt. Insofern entfällt bei dem Empfänger 18 die Notwendigkeit, ihn mit einer Referenzgasprobe individuell füllen zu müssen. Das Kondensatormikrophon 16 ist in der elektronischen Einheit 19 auf den Eingang eines Verstärkers 20 geschaltet. Die Ausgänge der Verstärker 20 und 21 können alternativ auf den Eingang der Regelung 22 geschaltet werden. Bereits vor der Durchführung des Abgleichs zur Ermittlung des Referenzwertes mit dem Empfänger 18 werden die Küvetten des Empfängers 17 mit Vorteil mit der zu analysierenden Gasprobe gefüllt. Referenzund Messwert können dann unmittelbar aufeinanderfolgend ermittelt werden, was sich auf die Messgenauigkeit vorteilhaft auswirkt, indem Einflüsse wie z.B. Temperaturschwankungen, die durch das Abgleichverfahren nicht automatisch kompensiert werden, eliminiert werden. Durch den zweiten, mit einem Referenzgas fest gefüllten Empfänger 18 entfällt auch das Hantieren mit der Referenzgasprobe, was Verwechslungen vorbeugt und die Bedienung der Vorrichtung insgesamt einfacher macht.

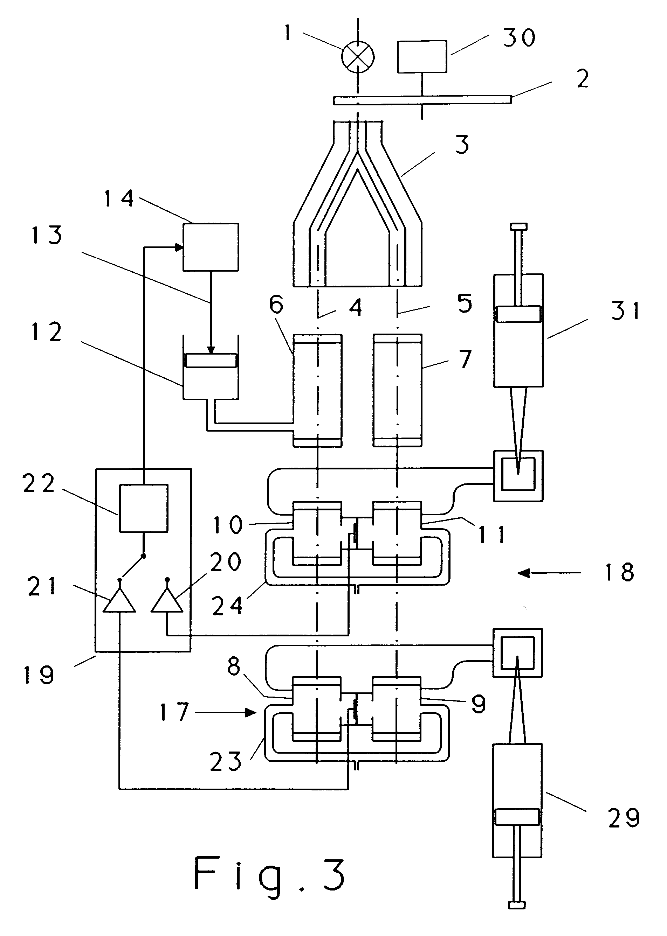

Will man den sich durch die Verwendung einer festen Referenzgasprobe möglicherweise ergebenen Messfehler jedoch nicht akzeptieren, dennoch aber die Referenzwertermittlung und die eigentliche Messung unmittelbar aufeinanderfolgend ausführen, bietet sich die Ausführungsform gemäss Fig. 3 an. Hier sind ebenfalls zwei optopneumatische Empfänger 17 und 18 vorgesehen, wobei jedoch die Küvetten 10,11 des Empfängers 18 aus der Spritze 31 (über Kappilarverbindungen) ebenfalls individuell füllbar sind.

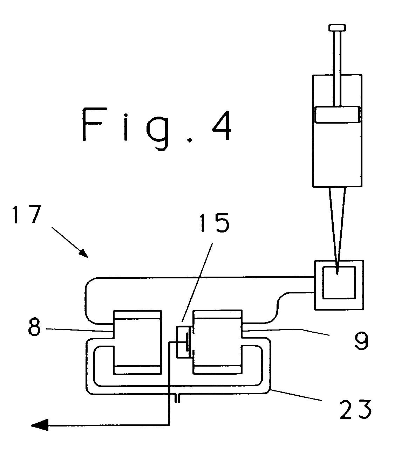

Fig. 4 zeigt eine alternative, technisch einfachere Ausführungsform für die optopneumatischen Empfänger 17 oder 18 anhand des Empfängers 17. Hier ist das Kondensatormikrophon 15 lediglich der Küvette 9 zugeordnet. Dennoch registriert es auch die periodischen Druckschwankungen in der Küvette 8, da diese über die Verbindungsleitung 23 zu ihm übertragen werden. Sie kommen dort lediglich zeitlich etwas verzögert, d.h. phasenverschoben an. Durch geeignete Wahl der Länge der Verbindungsleitung 23 kann die Phasenverschiebung gerade auf eine halbe Periodenlänge eingestellt werden. An der Membran des Kondensatormikrophons 15 ergeben sich dann ähnliche Verhältnisse wie im Fall ihrer Beaufschlagung mit dem Differenzdruck beider Küvetten 8 und 9.

Es versteht sich, dass noch weitere Elemente der vorstehend erläuterten Vorrichtungen anders als beschrieben ausführbar sind. Dies gilt z.B. hinsichtlich der Erzeugung der beiden pulsierenden Lichtstrahlen in den beiden Strahlengängen, der Mittel zum Füllen der Küvetten 8,9 bzw. 10,11 und der Mittel, die für die Aenderung und Einstellung des Druckes in der ersten Küvette 6 eingesetzt werden. Ein Abgleich von Hand ist natürlich auch möglich. Anstatt in der Küvette 6, könnte der Druck auch der Küvette 7 reguliert werden. Mit Vorteil könnte auch eine LCD-Anzeige für die Anzeige des jeweils eingestellten Druckwertes oder der diesem entsprechenden Grösse vorgesehen werden. Eine vorgängige Umrechung in die letztlich interessierenden Konzentrationswerte wäre dabei weiter bevorzugt.

Bei der Ausführung der erfindungsgemässen Vorrichtung mit zwei optopneumatischen Empfängern gemäss Fig. 2 oder 3 könnte auch der im Strahlengang ganz hinten angeordnete Empfänger 17 mit der Referenzgasprobe gefüllt sein bzw. beschickt werden und umgekehrt der vor diesem im Strahlengang angeordnete Empfänger 18 mit der zu analysierenden Gasprobe. Dass sich die Verhältnisse durch eine derartige Vertauschung nicht grundlegend ändern, ergibt sich bereits aus der Tatsache, dass es sich bei der Referenzgasprobe ebenfalls um eine Atemgasprobe des Patienten handeln kann. Referenzgasprobe und zu analysierende Gasprobe unterscheiden sich in einem solchen Fall lediglich dadurch, dass erstere vor der Einnahme des Harnstoffpräparates von dem Patienten gewonnen wurde und letztere danach.

Die Bestimmung des ¹³CO₂/¹²CO₂-Konzentrationsverhältnisses auf eine der vorbeschriebenen Arten setzt an sich voraus, dass die CO₂-Konzentration als solche bekannt und auch weitgehend konstant ist und zwar wegen der endlichen Dicke der optopneumatischen Empfänger. Da man im allgemeinen bestrebt sein wird, mit CO₂ gesättigte Alveolarluft aus einem einzigen Atemzug des Patienten für die Messung zu verwenden (was bei Probenmengen um 10 ml ohne weiteres möglich ist), ist diese Bedingung recht gut erfüllt, da gesättigte Alveolarluft u.a. wegen der Pufferungseigenschaften des Blutes eine CO₂-Konzentration im engen Bereich zwischen 5 % und 5,6% aufweist. Will man von dieser einschränkenden Bedingung allerdings frei werden und/oder den durch mögliche Schwankungen der CO₂-Konzentration sich ergebenden Messfehler vermeiden, müsste diese gesondert bestimmt werden. Dies kann auf separatem Wege mit jedem dazu geeigneten bekannten Messverfahren oder auch direkt mit der erfindungsgemässen Vorrichtung selbst erfolgen. Dazu genügt es, eine weitere Messung auszuführen, bei welcher sich im vorderen optopneumatischen Empfänger z.B. ein das verwendete Infrarotlicht praktisch nicht absorbierendes Gas (vorzugsweise Luft) befindet und der Abgleich mit dem hinteren Empfänger durchgeführt wird, in dem sich z.B. die Referenzgasprobe befindet. Die bei dieser Messung ermittelte Stellung der Mikrometerschraube dient als Null-Stellung x₀ der Messvorrichtung relativ zu welcher die Stellungen x₁ und x₂ der Mikrometerschraube bei den Abgleichen am vorderen und am hinteren Empfänger ermittelt werden, wenn der vordere Empfänger mit der zu analysierenden Gasprobe gefüllt ist. Das gesuchte Konzentrationsverhältnis ergibt sich dann als Funktion von Δx₁ = x₁ - x₀ und Δx₁ = x₂ - x_{0.}

Bisher wurde über die Volumina der optopneumatischen Empfänger sowie über die Pulsfrequenz f des Infrarotlichtes (Chopperfrequenz) noch nichts ausgesagt. Tatsächlich bestehen zwischen diesen Grössen sowie weiteren Parametern gewisse Abhängigkeiten, die im folgenden erläutert werden sollen.

Was zunächst die Volumina anbetrifft, so werden diese durch die zur Verfügung stehenden Probenmengen nach oben begrenzt. Generell sollten diese so klein wie möglich sein. Wenn für einen Atemtest z.B. gesättigte Alveolarluft aus lediglich einem einzigen Atemzug des Patienten genügen soll, dann darf das Volumen der Gasproben nicht wesentlich grösser als 10 ml sein. Das Volumen der optopneumatischen Empfänger muss dann kleiner 6 ml, vorzugsweise sogar kleiner 3 ml sein.

Die sich in den optopneumatischen Empfängern ergebende Amplitude der Druckschwankungen verhält sich angenähert umgekehrt proportional zur Pulsfrequenz f des Infrarotlichtes. Von daher wären niedrige Frequenzen im Bereich zwischen 1 und 150 Hz höheren an sich vorzuziehen. Zur Erzielung eines ausreichenden Störabstandes insbesondere gegenüber Trittschall sind Frequenzen grösser 200 Hz (bis ca. 2000 Hz) jedoch von Vorteil. Der Amplitudenverlust durch die 1/f-Abhängigkeit lässt sich andererseits durch Resonanzüberhöhung jedoch kompensieren, wenn die optopneumatischen Empfänger, wie beschrieben, als akustische Resonatoren ausgebildet und betrieben werden. Die Ausnutzung einer Resonanzüberhöhung der Druckschwankungen ist andererseits aber auch nur für Frequenzen grösser 200 Hz sinnvoll, da sich für das Volumen der optopneumatischen Empfänger bei Frequenzen unterhalb 150 Hz ein zu grosser Wert ergeben würde.

Die Wahl einer Frequenz grösser 200 Hz in Verbindung mit der Ausbildung der optopneumatischen Empfänger als resonante Systeme hat den weiteren Vorteil, dass deren Entlüftung in die Umgebung in einfacher Weise über ein relativ grosses Loch ausgeführt werden kann, wenn dafür gesorgt ist, dass sich an der Stelle des Lochs gerade ein Druckknoten der sich ausbildenden stehenden Welle befindet. Bei einem nichtresonanten System mit niedriger Frequenz müsste die Entlüftung über ein Ventil oder zumindest eine weitere Kapillare erfolgen.

Nach den bisherigen Erfahrungen kann mit der erfindungsgemässen Vorrichtung in ihrer bevorzugten Ausbildung eine Messgenauigkeit von besser als 10 ppm ¹³CO₂ erreicht werden.

## Patentansprüche

1. Vorrichtung zur Bestimmung des ¹³CO₂/¹²CO₂-Konzentrationsverhältnisses in einer Gasprobe umfassend eine pulsierende Infrarotlichtquelle (1), zwei vom Licht der Lichtquelle parallel durchsetzte erste Küvetten (6,7),von denen die eine im wesentlichen nur ¹³CO₂-Gas und die andere im wesentlichen nur ¹²CO₂-Gas enthält, zwei ebenfalls vom Licht der Infrarotlichtquelle parallel durchsetzte, jeweils einen Teil der Gasprobe enthaltende zweite Küvetten (8,9) und erste, eine Membran aufweisende Druckumformermittel (15) zur Umformung von durch Absorption des genannten Lichtes in zwei der genannten Küvetten bedingten periodischen Druckschwankungen in elektrische Signale, dadurch gekennzeichnet, dass die beiden ersten Küvetten (6,7) im Strahlengang jeweils vor den beiden zweiten Küvetten (8,9) angeordnet sind, dass der Druck in einer der beiden ersten Küvetten (6,7) einstellbar ist und dass die Membran der ersten Druckumformermittel (15) so angeordnet ist, dass sie auf Druckschwankungen in jeder der beiden zweiten Küvetten (8,9) emfindlich ist.

2. Vorrichtung nach Anspruch 1, dadurch gekennzeichnet, dass die Membran der ersten Druckumformermittel (15) gemeinsamer Wandteil der beiden zweiten Küvetten (8,9) und mit dem jeweiligen Differenzdruck in den beiden zweiten Küvetten (8,9) beaufschlagt ist.

3. Vorrichtung nach Anspruch 1, dadurch gekennzeichnet, dass die Membran der ersten Druckumformermittel (15) ein Wandteil lediglich einer der beiden zweiten Küvetten (8,9) ist und Druckschwankungen in der anderen zweiten Küvette über eine Verbindungsleitung (23) zwischen den beiden zweiten Küvetten (8,9) erfährt.

4. Vorrichtung nach einem der Ansprüche 1 bis 3, dadurch gekennzeichnet, dass die beiden zweiten Küvetten (8,9) über eine Verbindungsleitung (23) miteinander kommunizieren und dass die Länge dieser Verbindungsleitung und die Frequenz der pulsierenden Infrarotlichtquelle (1) so gewählt sind, dass sich bezüglich der periodischen Druckschwankung in den beiden zweiten Küvetten (8,9) an der Membran der ersten Druckumformermittel (15) ein Druckbauch einstellt.

5. Vorrichtung nach Anspruch 4, dadurch gekennzeichnet, dass die beiden zweiten Küvetten (8,9) über jeweils eine Kapillare (26,27) mit der Gasprobe beschickbar sind und dass die Verbindungsleitung (23) dort, wo sich bei den periodischen Druckschwankungen ein Druckknoten einstellt, zur Umgebung hin offen ist.

6. Vorrichtung nach einem der Ansprüche 1 bis 5, dadurch gekennzeichnet, dass der Druck in einer der beiden ersten Küvetten (6) mittels einer auf eine Membran einer Druckdose oder einen Druckzylinderkolben (12) einwirkenden Stellschraube (13) einstellbar ist.

7. Vorrichtung nach einem der Ansprüche 1 bis 6, dadurch gekennzeichnet, dass als pulsierende Infrarotlichtquelle (1) eine Niedervolt-Halogenlampe in Verbindung mit einem motorisch angetriebenen, rotierenden Flügelrad (2), bzw. einer entsprechenden Lochscheibe verwendet ist.

8. Vorrichtung nach einem der Ansprüche 1 bis 7, dadurch gekennzeichnet, dass das Licht der pulsierenden Infrarotlichtquelle (1) über einen Strahlteiler (3) in zwei gleichphasige und bezüglich ihrer Intensität vorzugsweise identische Teilstrahlen (4,5) aufgeteilt ist.

9. Vorrichtung nach einem der Ansprüche 1 bis 8, dadurch gekennzeichnet, dass ein Paar von dritten, jeweils einen Teil einer Referenzgasprobe enthaltende, ebenfalls vom Licht der Infrarotlichtquelle (1) parallel durchsetzte Küvetten (10,11) vorgesehen sind und dass eine Membran von zweiten Druckumformermitteln (16) so angeordnet ist, dass sie auf Druckschwankungen in jeder der beiden dritten Küvetten (10,11) empfindlich ist.

10. Vorrichtung nach Anspruch 9, dadurch gekennzeichnet, dass die Membran der zweiten Druckumformermittel (16) gemeinsamer Wandteil der beiden dritten Küvetten (10,11) und mit dem jeweiligen Differenzdruck in den beiden dritten Küvetten (10,11) beaufschlagt ist.

11. Vorrichtung nach Anspruch 9, dadurch gekennzeichnet, dass die Membran der zweiten Druckumformermittel (16) ein Wandteil lediglich einer der beiden dritten Küvetten (10,11) ist und Druckschwankungen in der anderen dritten Küvette über eine Verbindungsleitung (24) zwischen den beiden dritten Küvetten (8,9) erfährt.

12. Vorrichtung nach einem der Ansprüche 9 bis 11, dadurch gekennzeichnet, dass die beiden dritten Küvetten (10,11) über eine Verbindungsleitung (24) miteinander kommunizieren und dass die Länge dieser Verbindungsleitung und die Frequenz der pulsierenden Infrarotlichtquelle (1) so gewählt sind, dass sich bezüglich der periodischen Druckschwankung in den beiden dritten Küvetten (10,11) an der Membran der zweiten Druckumformermittel (16) ein Druckbauch einstellt.

13. Vorrichtung nach Anspruch 12, dadurch gekennzeichnet, dass die beiden dritten Küvetten (10,11) über jeweils eine Kapillare mit einer Referenzgasprobe beschickbar sind und dass die Verbindungsleitung (24) dort, wo sich bei den periodischen Druckschwankungen ein Druckknoten einstellt, zur Umgebung hin offen ist.

14. Vorrichtung nach einem der Ansprüche 9 bis 13, dadurch gekennzeichnet, dass die beiden dritten Küvetten (10,11) mit einer Referenzgasprobe bekannter Zusammensetzung ständig gefüllt sind.

15. Vorrichtung nach einem der Ansprüche 9 bis 14, dadurch gekennzeichnet, dass die dritten Küvetten (10,11) im Stahlengang zwischen den ersten (6,7) und den zweiten Küvetten (8,9) angeordnet und dort vorzugsweise fest montiert sind.

16. Vorrichtung nach einem der Ansprüche 9 bis 14, dadurch gekennzeichnet, dass die dritten Küvetten (10,11) im Stahlengang hinter den ersten (6,7) und den zweiten Küvetten (8,9) angeordnet sind.

17. Vorrichtung nach einem der Ansprüche 1 bis 16, dadurch gekennzeichnet, dass das Volumen der zweiten (8,9) oder der dritten Küvetten (10,11) einschliesslich der sie ggf. verbindenden Verbindungsleitung (23,24) kleiner als 6 ml, vorzugsweise sogar kleiner als 3 ml ist.

18. Vorrichtung nach einem der Ansprüche 1 bis 17, dadurch gekennzeichnet, dass die Frequenz, mit der die Infrarotlichtquelle (1) pulsiert, im Bereich zwischen 200 und 2000 Hz gewählt ist.

19. Vorrichtung nach einem der Ansprüche 1 bis 18, dadurch gekennzeichnet, dass eine elektrische Steuer- und Auswerteeinheit vorgesehen ist, welche unter Veränderung des einstellbaren Druckes in einer der beiden ersten Küvetten (6) das Amplitudenminimum der von den ersten und/oder zweiten Druckumformermittlen (15,16) erzeugten elektrischen Signale ermittelt und den korrespondierenden Druckwert bzw. eine diesem entsprechende Grösse anzeigt.
